# EUROPEAN PATENT APPLICATION

(11) **EP 4 254 613 A1**
(43) Date of publication of application: **04.10.2023**
(21) Application number: 20962830.4
(22) Date of filing: 26.11.2020
(51) Int. Cl.: H01M 50/109

(54) **ELECTROCHEMICAL APPARATUS AND ELECTRONIC DEVICE**

(71) Applicant: Ningde Amperex Technology Limited, Ningde City, Fujian Province 352100 (CN)
(72) Inventor: ZHANG, Chi, Ningde, Fujian 352100 (CN)
(74) Representative: Icosa
(86) International application number: PCT/CN2020/131837
(87) International publication number: WO 2022/109939

(57) **Abstract**

An electrochemical apparatus includes a housing, an electrode assembly, and an electrolyte, the electrode assembly and the electrolyte being disposed in the housing. The housing includes a housing body, a housing cover covering the housing body, and a sealing plug, where an injection opening is disposed at the center of the housing cover and the sealing plug is configured to seal the injection opening. The housing body includes a side wall. A first tab of the electrode assembly is electrically connected to the side wall. A second tab of the electrode assembly is electrically connected to a pole disposed on the side wall. The pole is insulated from the side wall.

## Description

### TECHNICAL FIELD

This application relates to the field of electrochemical apparatuses, and specifically, to an electrochemical apparatus and an electronic device.

### BACKGROUND

The rapid development of the TWS (True Wireless Stereo, true wireless stereo) earphone industry has driven the demand for button lithium-ion batteries to grow. For button-type lithium-ion batteries, it is crucial to reduce the manufacturing costs of cells, improve the production efficiency, and ensure the reliability of cells.

Typically, cells of existing button-type lithium-ion batteries are provided with an injection opening at the edge of the housing cover, thus providing an injection channel. In the injection operation of cell preparation, after mechanically positioned and loaded to an injection device, the cell still needs to be rotated by a specific angle so as to correct the angle of the injection opening for electrolyte injection. In addition, the welding position of a sealing nail for sealing the injection opening may interfere with the welding edge of the housing cover, making processing more difficult.

### SUMMARY

According to a first aspect of this application, an electrochemical apparatus is provided. The electrochemical apparatus includes a housing, an electrode assembly, and an electrolyte, the electrode assembly and the electrolyte being disposed in the housing. The housing includes a housing body, a housing cover covering the housing body, and a sealing plug. The housing body includes a side wall. An injection opening is disposed at the center of the housing cover and the sealing plug is configured to seal the injection opening. A first tab of the electrode assembly is electrically connected to the side wall, a second tab of the electrode assembly is electrically connected to a pole disposed on the side wall, and the pole is insulated from the side wall.

In an embodiment of this application, the electrode assembly is a wound structure with an axial direction of the electrode assembly parallel to the housing cover. Alternatively, the electrode assembly is a stacked structure with electrode plates of the electrode assembly parallel to the housing cover.

In an embodiment of this application, the side wall includes a metal layer. The metal layer is electrically connected to a first electrode plate in the electrode assembly. The side wall of the housing body is provided with a through hole. The pole is disposed in the through hole. A first end of the pole extends out of the through hole, and a second end of the pole is electrically connected to a second electrode plate in the electrode assembly. The sealing insulator is disposed around the pole to insulate the pole from the metal layer of the side wall and seal the through hole.

In an embodiment of this application, the first electrode plate is a negative electrode plate, and the second electrode plate is a positive electrode plate. The electrochemical apparatus further includes a positive electrode adapter conductor and a negative electrode adapter conductor. The electrode assembly further includes a plurality of positive electrode tabs and a plurality of negative electrode tabs. Each wound layer of the positive electrode plate in the wound structure or each layer of positive electrode plate in the stacked structure is electrically connected to a first end of the positive electrode adapter conductor through one of the positive electrode tabs, and a second end of the positive electrode adapter conductor is electrically connected to the second end of the pole. Each wound layer of the negative electrode plate in the wound structure or each layer of negative electrode plate in the stacked structure is electrically connected to a first end of the negative electrode adapter conductor through one of the negative electrode tabs, and a second end of the negative electrode adapter conductor is electrically connected to the metal layer of the side wall.

In an embodiment of this application, the injection opening includes a through hole as an injection channel and a first groove disposed around the through hole. The sealing plug includes a plug head and a plug cap, where the plug head fits the through hole in diameter, and the plug cap fits the first groove.

In an embodiment of this application, a side of the housing cover closer to the electrode assembly is further provided with a second groove in communication with the injection opening, and the second groove extends from the injection opening to a gap between the housing body and the electrode assembly.

In an embodiment of this application, the electrochemical apparatus further includes an anti-explosion valve, the anti-explosion valve being disposed on the sealing plug.

In an embodiment of this application, the anti-explosion valve is a gap formed on the sealing plug, and the depth of the gap is smaller than the thickness of the sealing plug.

In an embodiment of this application, the side wall includes a first portion and a second portion. The first portion is a plane perpendicular to the housing cover, and the through hole is disposed at the first portion. The second portion surrounds the first portion to form a closed structure.

In an embodiment of this application, an insulation gasket is disposed on an end surface of the bottom of the housing body.

According to a second aspect of this application, an electronic device is further provided, where the electronic device includes the foregoing electrochemical apparatus.

### Beneficial effects

The side wall of the housing of the electrochemical apparatus in this application and the pole insulated from the side wall are respectively used as the positive and negative electrodes of the electrochemical apparatus, the axial direction of the electrode assembly is parallel to the housing cover, and the housing cover does not need to be provided with positive and negative electrodes of the electrochemical apparatus. Therefore, the injection opening can be disposed at the center of the housing cover. In the electrolyte injection operation, because the injection opening is disposed at the center of the housing cover, the device only needs to mechanically position the housing without the need to visually correct the angle of the injection opening, thus improving the production efficiency. In addition, because the injection opening is disposed at the center of the housing cover, distance between the edge of the injection opening and the edge of the housing cover is increased, avoiding the risk of remelting the joint position of the housing cover and the housing body when the sealing plug is welded to seal the injection opening. This reduces the processing difficulty, thereby reducing the manufacturing costs and improving the production efficiency.

### BRIEF DESCRIPTION OF DRAWINGS

FIG. 1 is a schematic diagram of a structure of an electrochemical apparatus according to some embodiments of this application;
FIG. 2 is a schematic diagram of a cross-sectional structure of an electrochemical apparatus according to some embodiments of this application;
FIG. 3 is a schematic diagram showing local enlargement of a negative electrode tab in FIG. 2;
FIG. 4 is a schematic diagram showing local enlargement of a positive electrode tab in FIG. 2;
FIG. 5 is a schematic diagram of a structure of a housing cover of an electrochemical apparatus according to this application;
FIG. 6 is a schematic diagram of a cross-sectional structure of the housing cover in FIG. 5;
FIG. 7 is a schematic diagram of a structure of a sealing plug of an electrochemical apparatus according to this application;
FIG. 8 is a schematic diagram of a structure of another housing cover of an electrochemical apparatus according to this application; and
FIG. 9 is a schematic diagram of a structure of another sealing plug of an electrochemical apparatus according to this application.

### DESCRIPTIONS OF EMBODIMENTS OF THIS APPLICATION

The following describes clearly and completely the technical solutions in the exemplary embodiments of this application with reference to the accompanying drawings in the embodiments of this application. Without any conflicts, the following embodiments and technical features thereof may be combined.

The orientation terms as mentioned in this application, such as up, down, top, bottom, front, back, left, right, inside, outside, center, horizontal, transverse, perpendicular, longitudinal, axial, radial, uppermost, or lowermost, are merely directions as shown in the accompanying drawings. Therefore, the orientation terms as used are used to describe and help understand this application rather than to limit this application.

Although the following describes the technical solutions of this application by using button batteries as an example, persons skilled in the art should understand that the technical solutions of this application can be also applied to other electrochemical apparatuses with hard housings.

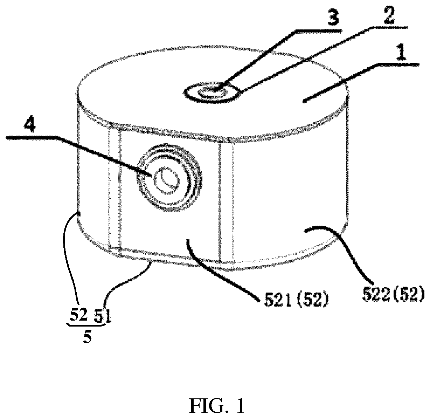

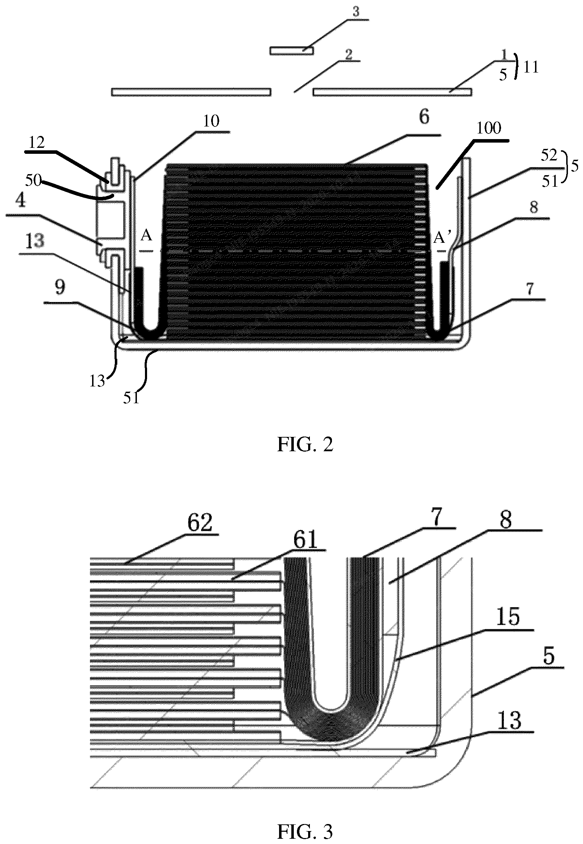

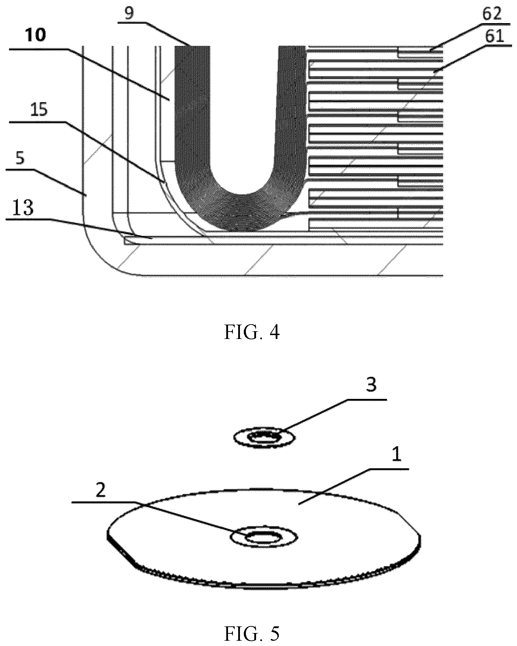

FIG. 1 is a schematic structural diagram of an electrochemical apparatus according to this application. FIG. 2 is a schematic diagram of a cross-sectional structure of the electrochemical apparatus according to this application. FIG. 3 is a diagram showing local details of a negative electrode tab in FIG. 2. FIG. 4 is a diagram showing local details of a positive electrode tab in FIG. 2.

As shown in FIG. 1 and FIG. 2, an embodiment of this application provides an electrochemical apparatus. The electrochemical apparatus includes a housing 11, an electrode assembly 6, and an electrolyte (not shown in the figure), the electrode assembly 6 and the electrolyte being disposed in the housing 11. The housing 11 includes a housing body 5, a housing cover 1 covering the housing body 5, and a sealing plug 3. An injection opening 2 is disposed at the center of the housing cover 1. The sealing plug 3 is configured to seal the injection opening 2. The housing body 5 includes a side wall 52. A first tab 8 of the electrode assembly is electrically connected to the side wall 52. A second tab 9 of the electrode assembly is electrically connected to a pole 4 on the side wall 52. The pole 4 is insulated from the side wall 52.

The electrolyte is injected from the injection opening 2, and the electrode assembly 6 is immersed in the electrolyte. The positive electrode and the negative electrode of the electrochemical apparatus in this application are disposed on the side surfaces of the housing 11. The axial direction A-A' of the electrode assembly 6 is parallel to the housing cover 1. Current is drawn from the side surface of the electrochemical apparatus. The injection opening 2 may be disposed at the center of the housing cover 1.

If the housing cover 1 is in a regular shape, the center of the housing cover 1 is the geometric center of the housing cover 1. If the shape of the housing cover 1 is a centrosymmetric figure, the center of the housing cover 1 is the symmetrical center of the housing cover 1. For example, when the housing cover 1 is a circle, the center of the housing cover 1 is the center of the circle; and when the housing cover 1 is a square or rectangle, the center of the housing cover 1 is the intersection of two diagonals of the square or rectangle.

In some embodiments, the housing cover 1 is a substantially circular housing cover, and the injection opening 2 is located at the center of the substantially circular housing cover. In some other embodiments, the housing cover 1 can alternatively be in other shapes such as square or rectangle, and the injection opening 2 is located at the geometric center of the housing covers 1 in these shapes.

The injection opening 2 being disposed at the center of the housing cover 1 means that the injection opening 2 is disposed concentrically with the housing cover 1 or that a specific condentricity is maintained between the injection opening 2 and the housing cover 1, where the specific value of the condentricity ensures that the electrolyte injection head of the electrolyte injection device is aligned with the injection opening 2 on the housing cover 1 via only one mechanical positioning operation as described below, without the need to continue to change the position of the housing 11 or rotate the housing 11 for angle correction.

In the injection operation of electrochemical apparatus manufacturing, because the injection opening 2 is disposed at the center of the housing cover 1, the device only needs to mechanically position the housing 11 once with no need of visual angle correction between the electrolyte injection head and the injection opening 2, thus improving the production efficiency. In addition, because the injection opening 2 is disposed at the center of the housing cover 1, distance between the edge of the injection opening 2 and the edge of the housing cover 1 is increased, avoiding the risk of remelting the joint position of the housing cover 1 and the housing body 5 when the injection opening 2 is sealed by welding. This reduces the processing difficulty, thereby reducing the manufacturing costs and improving the production efficiency. With the concentricity between the injection opening 2 and the housing cover 1 maintained within the predetermined error range, the electrolyte injection operation only requires that the housing 11 with the housing cover 1 is mechanically positioned.

During specific implementation, a deviation between the injection opening 2 and the center of the housing cover 1 is allowed, but the range of the deviation is associated with the size of the electrolyte injection head of the electrolyte injection device and the diameter of the injection opening 2.

In some embodiments, the electrode assembly 6 is a wound structure or a stacked structure. When the electrode assembly 6 is a wound structure, the axial direction (A-A') of the electrode assembly 6 is parallel to the housing cover 1. When the electrode assembly 6 is a stacked structure, the electrode plates of the electrode assembly 6 are parallel to the housing cover 1, and the axial direction of the electrode assembly is perpendicular to the electrode plates of the electrode assembly.

In some embodiments, the electrochemical apparatus further includes adapter conductors 8 and 10. The first electrode plate and the second electrode plate of the electrode assembly are respectively connected to the side wall 52 and the pole 4 of the housing through the adapter conductors 8 and 10. The adapter conductors 8 and 10 are disposed between the electrode assembly 6 and side walls 52 of the housing 11.

In some current button batteries, the positive pole is disposed at the center of the housing cover 1, and the electrode assembly 6 with a wound structure or stacked structure is led out from the top of the housing cover 1. Because the positive pole is disposed at the center of the housing cover 1, the injection opening can only be disposed at the edge of the housing cover 1 or the bottom of the housing 11. This is not conducive to the electrolyte injection operation. In view of the foregoing issue, in the electrochemical apparatus of this application, the positive electrode and the negative electrode are disposed on the side surfaces of the housing, and the electrode assembly 6 is a wound structure with the axial direction of the wound structure substantially parallel to the housing cover 1 (or, the electrode assembly 6 is a stacked structure with the stacked electrode plates substantially parallel to the housing cover 1). In this way, the tab lead-out side of the electrode assembly 6 is close to the side wall 52 of the housing body 5, and is electrically connected to the side wall 52 of the housing body 5 and the pole 4. In this way, the positive pole can be disposed on the side wall 52 of the housing body 5 and insulated from the side wall 52 such that the injection opening 2 can be disposed at the center of the housing cover 1.

In some embodiments, the housing body 5 includes a metal layer or a side wall 52 made of metal. The housing body 5 may be also made of metal, for example, being a steel housing. The metal layer of the housing body 5 or the housing body 5 made of metal is electrically connected to the first electrode plate in the electrode assembly 6. The side wall 52 of the housing body 5 is provided with a through hole 50, and the pole 4 is disposed in the through hole 50. A first end of the pole 4 extends out of the through hole 50, and a second end of the pole 4 is electrically connected to a second electrode plate in the electrode assembly 6. The sealing insulator 12 is disposed around the pole 4 to insulate the pole 4 from the metal layer of the housing body 5 or the housing body 5 made of metal and seal the through hole 50. For example, the sealing insulator 12 may be a rubber sealing ring.

In some embodiments, the first electrode plate is a negative electrode plate, and the second electrode plate is a positive electrode plate. The housing body 5 shown in FIGs. 2 to 4 is made of metal and electrically connected to the negative electrode plate in the electrode assembly 6. The housing body 5 made of metal is the negative electrode of the electrochemical apparatus. The pole 4 is electrically connected to the positive electrode plate in the electrode assembly 6, and the pole 4 is a positive pole. Specifically, the adapter conductors include a positive electrode adapter conductor 10 and a negative electrode adapter conductor 8. The electrode assembly 6 further includes a plurality of negative electrode tabs 7 and a plurality of positive electrode tabs 9. If the electrode assembly 6 is a wound structure, each wound layer of the negative electrode plate is electrically connected to the first end of the negative electrode adapter conductor 8 through one of the negative electrode tabs 7, and the second end of the negative electrode adapter conductor 8 is connected to the metallic housing body 5; and each wound layer of the positive electrode plate is electrically connected to the first end of the positive electrode adapter conductor 10 through one of the positive electrode tabs 9, and the second end of the positive electrode adapter conductor 10 is electrically connected to the pole 4.

Certainly, the above solution is also applicable to an electrode assembly of a stacked structure. When the electrode assembly 6 is a stacked structure, each layer of negative electrode plate in the stacked structure is electrically connected to the first end of the negative electrode adapter conductor 8 through one of the negative electrode tabs 7, and the second end of the negative electrode adapter conductor 8 is connected to the metallic housing body 5. Each layer of positive electrode plate in the stacked structure is electrically connected to the first end of the positive electrode adapter conductor 10 through one of the positive electrode tabs 9, and the second end of the positive electrode adapter conductor 10 is electrically connected to the pole 4.

As shown in FIGs. 2 to FIG. 4, the tab lead-out side of the electrode assembly 6 is opposite the side wall 52 of the housing body 5. One negative electrode tab 7 is led out from each wound layer of the negative electrode plate or each layer of negative electrode plate in the stacked structure. After stacked and bent, the negative electrode tabs 7 are electrically connected to the first end of the negative electrode adapter conductor 8. One positive electrode tab 9 is led out from each wound layer of the positive electrode plate or each layer of positive electrode plate in the stacked structure. After stacked and bent, the positive electrode tabs 9 are electrically connected to the first end of the positive electrode adapter conductor 10. A gap 100 is present between the left and right side walls 52 of the housing body 5, the width of the gap being about 1-3 mm. The gap 100 can not only be used for arrangement of the adapter conductor and the connection structure between the tab and the adapter conductor, but also ensure the fluidity of the electrolyte during injection and the infiltration of the electrolyte to the wound layers of the electrode assembly 6.

In addition, as shown in FIG. 3, after a plurality of negative electrode tabs 7 are stacked, a tab protection adhesive 15 is attached outside a tail end (an end connected to the negative electrode adapter conductor 8) of the stacked negative electrode tabs close to the housing 11. After a plurality of positive electrode tabs 10 are stacked, a tab protection adhesive 15 is attached outside a tail end (an end connected to the positive electrode adapter conductor 10) of the stacked positive electrode tabs close to the housing 11. The tab protection adhesive 15 also plays an insulating role. The housing body 5 may include a bottom end surface 51 and a side wall 52. An insulation gasket 13 is disposed on the bottom end surface 51 of the housing body 5. The insulation gasket 13 is disposed between electrode assembly 6 and housing body 5. As shown in FIG. 1, for example, the side wall 52 includes a first portion 521 and a second portion 522. The first portion 521 is a plane perpendicular to the housing cover 1, and the through hole 50 is disposed at the first portion 521; and the second portion 522 surrounds the first portion 521 to form a closed structure.

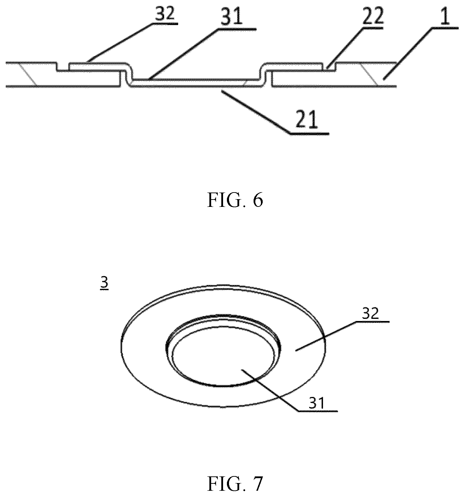

FIG. 5 is a schematic structural diagram of a housing cover of an electrochemical apparatus according to this application. FIG. 6 is a schematic diagram of a cross-sectional structure of the housing cover in FIG. 5. FIG. 7 is a schematic structural diagram of a sealing plug.

In some embodiments, the injection opening 2 of the electrochemical apparatus is designed as a countersink hole. The sealing plug 3 may be disposed in the countersink hole. This can prevent the sealing plug 3 from occupying the top space of the electrochemical apparatus and increase the energy density when a plurality of electrochemical apparatuses form a battery of large capacity.

As shown in FIG. 6, the injection opening 2 includes a through hole 21 serving as an injection channel and a first groove 22 disposed around the through hole 21. The first groove 22 can be formed by pressing to sink the top edge of the through hole 21. The top edge of the through hole 21 refers to the edge of the through hole 21 on the side of the housing cover 1 away from the electrode assembly 6. As shown in FIGs. 6 and 7, the sealing plug 3 includes a plug head 31 and a plug cap 32, the plug head 31 fits the through hole 21 in diameter, and the plug cap 32 fits the first groove 22. In some embodiments, after the electrolyte is injected, the sealing plug 3 is assembled on the housing cover 1, and the upper surface of the sealing plug 3 is substantially on the same plane as the upper surface of the housing cover.

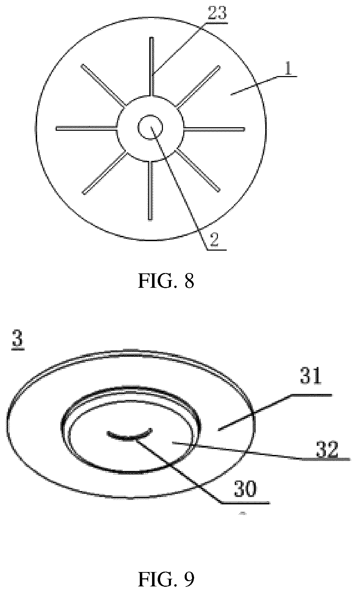

FIG. 8 is a schematic structural diagram of a side of another housing cover of the electrochemical apparatus close to an electrode assembly according to this application.

As shown in FIG. 8, a side of the housing cover 1 of the electrochemical apparatus close to the electrode assembly is further provided with a second groove 23 in communication with the injection opening 2, and the second groove 23 extends from the injection opening 2 to the edge of the housing cover 1. Preferably, the second groove 23 includes a first depression, the first depression being distributed around the injection opening 2. The second groove 23 further extends from the first depression to above a gap 100 between the housing cover 1 and the electrode assembly 6. With the side of the housing cover 1 close to the electrode assembly provided with the second groove 23 in communication with the injection opening 2, electrolyte injected can flow toward the side wall 52 of the housing 11 along the second groove and flow downward along the side wall 52 of the housing 11, making it easy to inject electrolyte.

FIG. 9 is a schematic structural diagram of another sealing plug with an anti-explosion valve of an electrochemical apparatus according to this application.

Generally, the electrochemical apparatus further includes an anti-explosion valve. When the battery heats up, the gas inside the battery expands, and the internal pressure of the battery increases. When the pressure increases to a specific level, the anti-explosion valve opens to release the gas and pressure, thereby preventing the battery from exploding. The anti-explosion valve of the electrochemical apparatus of this application may be disposed on the sealing plug 3. As shown in FIG. 9, the anti-explosion valve 30 can be a gap carved on the sealing plug 3, and depth of the gap is smaller than thickness of the sealing plug 3.

For example, the sealing plug 3 in the shape shown in FIG. 7 may be made of metal and etched using laser inside the sealing plug 3 to form the gap penetrating through part of the sealing plug 3 with a specific thickness. The gap is the anti-explosion valve 30. The shape and depth of the anti-explosion valve 30 may be various. When the internal pressure of the cell reaches a specific level, the anti-explosion valve cracks due to stress concentration to relieve the pressure. After the electrolyte injection is completed, the sealing plug 3 is welded to the injection opening 2 using laser so as to seal the injection opening 2.

If etching is performed inside the housing cover 1 to form the anti-explosion valve 30, it is necessary to distinguish between the front and back of the housing cover 1 before etching. Moreover, during mass production, it is possible that the front and back of the housing cover 1 are fit inversely, which causes the side etched with the anti-explosion valve 30 to face outward. As a result, the anti-explosion valve 30 is unable to fulfill the pressure relief function. However, with the anti-explosion valve 30 disposed inside the sealing plug 3, the front and back of the sealing plug 3 will not be fit inversely, thus avoiding failure of the anti-explosion valve caused by the error of the fit direction.

In the electrochemical apparatus provided in this application, the injection opening is disposed at the center of the housing cover, and positioning is performed only once for electrolyte injection. The injection opening may be designed as a counterbore. The injection opening can be sealed by the sealing plug etched inside with an anti-explosion valve, facilitating easy processing and efficient assembling.

This application further provides an electronic apparatus including the electrochemical apparatus according to any one of the above descriptions.

Although the application has been shown and described with respect to one or more embodiments, equivalent alterations and modifications will occur to others skilled in the art upon the reading and understanding of this specification and the drawings. This application includes all such modifications and variations and is limited only by the scope of the appended claims. In particular with respect to the various functions performed by foregoing components, the terms used to describe such components are intended to correspond to any components (unless otherwise indicated) that perform specified functions (for example, being equivalent in functionality) of the components, even if these components are not structurally equivalent to the disclosed structures for performing the functions in the exemplary embodiments of this specification as described herein. Further, although particular features of this specification have been disclosed with respect to only one of several embodiments, such features may be combined with one or more other features of other embodiments that, for example, may be desired and advantageous for a given or particular application. Further, the terms "include", "have", "contain", or variations thereof as used in the embodiments or claims are intended to mean inclusions as is meant by the term "comprise". Further, it should be understood that "a plurality" mentioned in this specification means two or more than two. For the steps mentioned in this specification, the numerical suffixes are only used to clearly describe the embodiments and help ease of understanding, without entirely representing the order of execution of such steps, whereas the order should be rendered in consideration of the logic relations.

The foregoing descriptions are merely some embodiments of this application, which are not intended to limit the scope of this application. Any equivalent structures or equivalent process transformations made on the basis of the description and drawings of this application, such as combinations of technical features of various embodiments or direct or indirect application in other related technical fields, are included in the protection scope of this application in the same way.

## Claims

1. An electrochemical apparatus, comprising a housing, an electrode assembly, and an electrolyte, the electrode assembly and the electrolyte being disposed in the housing, wherein the housing comprises:
a housing body, wherein the housing body comprises a side wall;
a housing cover covering the housing body, wherein an injection opening is disposed at the center of the housing cover; and
a sealing plug configured to seal the injection opening;
wherein a first tab of the electrode assembly is electrically connected to the side wall, a second tab of the electrode assembly is electrically connected to a pole disposed on the side wall, and the pole is insulated from the side wall.

2. The electrochemical apparatus according to claim 1, wherein the electrochemical apparatus further comprises an anti-explosion valve, and the anti-explosion valve is disposed on the sealing plug.

3. The electrochemical apparatus according to claim 2, wherein the anti-explosion valve is a gap formed on a surface of the sealing plug close to the inside of the housing, and depth of the gap is smaller than thickness of the sealing plug.

4. The electrochemical apparatus according to claim 1, wherein the injection opening comprises a through hole serving as an injection channel and a first groove disposed around the through hole; and the sealing plug comprises a plug head and a plug cap, wherein the plug head fits the through hole in diameter, and the plug cap fits the first groove.

5. The electrochemical apparatus according to claim 1, wherein a side of the housing cover closer to the electrode assembly is further provided with a second groove in communication with the injection opening, and the second groove extends from the injection opening to a gap between the housing body and the electrode assembly.

6. The electrochemical apparatus according to claim 1, wherein
the electrode assembly is a wound structure with an axial direction of the electrode assembly parallel to the housing cover; or the electrode assembly is a stacked structure with electrode plates of the electrode assembly parallel to the housing cover.

7. The electrochemical apparatus according to claim 6, wherein the side wall comprises a metal layer, the metal layer being electrically connected to a first electrode plate in the electrode assembly; the side wall is provided with a through hole; and the pole is disposed in the through hole, a first end of the pole extending out of the through hole and a second end of the pole being electrically connected to a second electrode plate in the electrode assembly; and
the electrochemical apparatus further comprises a sealing insulator, wherein the sealing insulator is disposed around the pole to insulate the pole from the metal layer of the side wall and seal the through hole.

8. The electrochemical apparatus according to claim 7, wherein the first electrode plate is a negative electrode plate, and the second electrode plate is a positive electrode plate; and the electrochemical apparatus further comprises a positive electrode adapter conductor and a negative electrode adapter conductor; and
the electrode assembly further comprises a plurality of positive electrode tabs and a plurality of negative electrode tabs, wherein each wound layer of the positive electrode plate in the wound structure or each layer of positive electrode plate in the stacked structure is electrically connected to a first end of the positive electrode adapter conductor through one of the positive electrode tabs, and a second end of the positive electrode adapter conductor is electrically connected to the second end of the pole; and each wound layer of the negative electrode plate in the wound structure or each layer of negative electrode plate in the stacked structure is electrically connected to a first end of the negative electrode adapter conductor through one of the negative electrode tabs, and a second end of the negative electrode adapter conductor is electrically connected to the metal layer.

9. The electrochemical apparatus according to claim 7, wherein the side wall comprises a first portion and a second portion, wherein the first portion is a plane perpendicular to the housing cover, and the through hole is disposed at the first portion; and the second portion surrounds the first portion to form a closed structure.

10. The electrochemical apparatus according to claim 9, wherein an insulation gasket is disposed on an end surface of the bottom of the housing body.

11. An electronic device, wherein the electronic device comprises the electrochemical apparatus according to any one of claims 1 to 10.
